# EUROPÄISCHE PATENTSCHRIFT

(11) **EP 0 846 947 B1**
(45) Veröffentlichungstag und Bekanntmachung des Hinweises auf die Patenterteilung: **19.12.2001**
(21) Anmeldenummer: 97890202.1
(22) Anmeldetag: 09.10.1997
(51) Int. Cl.: G01N 27/28, G01N 21/01, G01N 33/487, G01N 33/49

(54) **Vorrichtung zur Durchführung von elektrochemischen und/oder optischen Messvorgängen in Flüssigkeiten**
Apparatus for performing electrochemical and/or optical measurements in liquids
Appareil pour effectuer des mesures électrochimiques et/ou optiques dans les liquides

(30) Priorität: 30.10.1996 AT 190696
(43) Veröffentlichungstag der Anmeldung: 10.06.1998
(73) Patentinhaber: F.HOFFMANN-LA ROCHE AG, 4070 Basel (CH)
(72) Erfinder: Huber, Wolfgang, 8501 Lieboch (AT); Dolezal, Andreas, 8045 Graz (AT); Schaffar, Bernhard, Dr., 8045 Graz (AT); Ritter, Christoph, Dr., 8045 Graz (AT)
(74) Vertreter: Babeluk, Michael, Dipl.-Ing. Mag.

(56) Entgegenhaltungen:
- EP-A- 0 625 704
- EP-A- 0 690 134
- US-A- 5 096 669
- US-A- 5 284 568
- US-A- 5 352 352

## Beschreibung

Die Erfindung betrifft eine Vorrichtung zur Durchführung von elektrochemischen und/oder optischen Meßvorgängen in Flüssigkeiten, bestehend aus folgenden Elementen:
- einem Sensorbauteil, das im wesentlichen planar ausgebildet ist, und das eine Mehrzahl von Sensoren trägt, die ggf. mit Leiterbahnen in Verbindung stehen;
- einem Abdeckteil, in dem ein nutförmiger Meßkanal ausgeformt ist, der für den Durchfluß der Flüssigkeit bestimmt ist;
- einem Dichtelement zur Abdichtung des Meßkanals, das zwischen dem Sensorbauteil und dem Abdeckteil angeordnet ist.

Elektrochemische und optische Meßvorgänge erfolgen allgemein in Meßkammern, die mit Elektroden und/oder Optoden ausgestattet sind. Die vorliegende Erfindung betrifft insbesonders solche Vorrichtungen, bei denen die Meßkammer als Meßkanal ausgebildet ist, durch die das zu untersuchende Medium, wie etwa Blut, durchströmen gelassen wird. Während des Durchströmens kommt dabei das Medium mit verschiedenen Sensoren bzw. Elektroden in Kontakt, um den eigentlichen Meßvorgang zu ermöglichen.

Aus der US-A-5 284 568 ist eine Meßanordnung bekannt, die einen Meßkanal aufweist, in dem eine Mehrzahl von Sensorelementen angeordnet ist. Die Sensoren sind auf einer Trägerplatte aufgebracht, die eine Begrenzungsfläche des Meßkanals bildet. Die übrigen Begrenzungen des Meßkanals werden durch ein Abdeckglied gebildet, das aus einem im wesentlichen elastomeren Material hergestellt ist. Das Befüllungsverhalten und die Biokompatibilität von solchen Elastomeren ist für viele Anwendungen unzureichend, so daß der Genauigkeit des Meßvorganges Grenzen gesetzt sind. Weiters ist die Geometrie des Meßkanals zufolge der möglichen Verformung nicht vollständig reproduzierbar. Insbesonders bei Biosensoren, die sehr empfindlich auf Veränderungen des Befüllungsverhaltens oder des Füllvolumens reagieren, wie dies etwa bei kinetischen Messungen der Fall ist, ergeben sich bei Verwendung der bekannten Anordnung Nachteile. Weiters ist die bekannte Anordnung aufwendig, da die Kontaktierung sowie die Zufuhr bzw. die Abfuhr des Mediums durch Anschlüsse im Elastomer schwierig ist.

Weiters ist aus der EP-A-690 134 eine elektrochemische Meßzelle bekannt, bei der eine Meßkammer als Ausnehmung in einem Bauteil geformt ist, wobei die Meßzelle an der gegenüberliegenden Seite durch eine Elektrodenplatte abgeschlossen ist. Zur Abdichtung ist ein Dichtelement vorgesehen, das eine Öffnung aufweist, die im wesentlichen der Ausnehmung der Meßkammer entspricht. Diese Bauteile werden in einem mehrteiligen Gehäuse aufgenommen, das letztlich verschweißt wird. Bei einer solchen Vorrichtung besteht ein Großteil der Oberfläche der Meßkammer aus einem Elastomer, so daß sich die gleichen Nachteile ergeben, wie sie oben beschrieben worden sind.

Ferner beschreibt die US-A-5 520 787 eine Meßzelle, die von zwei im wesentlichen ebenen Platten begrenzt ist. Zwischen diesen beiden Platten ist ein Abstandhalter angeordnet, der aus einem Dichtungsmaterial hergestellt ist. Eine entsprechende Ausnehmung in diesem Abstandhalter bildet den Meßkanal. Neben den oben beschriebenen Nachteilen ist hier anzumerken, daß die genaue Lage der seitlichen Kante des Meßkanals bei dieser Anordnung nicht definiert ist. Weiters werden die einzelnen Bauteile bei der vorgeschlagenen Lösung miteinander verklebt, so daß ein Kontakt der Kleberschicht mit dem Medium oder den Sensoren nicht ausgeschlossen werden kann. Bei bestimmten Meßvorgängen ist jedoch ein solcher Kontakt äußerst unerwünscht.

Aufgabe der vorliegenden Erfindung ist es, diese Nachteile zu vermeiden und eine Vorrichtung der oben beschriebenen Art zu schaffen, die einfach herstellbar ist, und die es ermöglicht ein genaue und reproduzierbare Geometrie des Meßkanals zu gewährleisten. Weiters soll der Anteil der Oberfläche des Meßkanals, der aus elastomeren Materialien gebildet ist, möglichst gering gehalten werden.

Erfindungsgemäß werden diese Aufgaben dadurch gelöst, daß in dem Abdeckteil Nuten parallel zum Meßkanal gebildet sind, wobei jeweils zwischen einer Nut und dem Meßkanal ein Steg geformt ist, daß das Dichtelement im wesentlichen aus Führungskörpern besteht, die in den Nuten des Abdeckteils aufgenommen sind, und an denen eine schmale Dichtlippe angeformt ist, die im Bereich des Steges vorsteht, und daß die Verbindung zwischen dem Sensorbauteil und dem Abdeckteil durch eine Vielzahl von Rastelementen erfolgt, die entlang des Meßkanals verteilt angeordnet sind.

Durch die Kombination der obigen Merkmale kann erreicht werden, daß die Dicke der Dichtungsschicht im Bereich des Meßkanals sehr gering ist, was die oben beschriebenen Vorteile aufweist. Durch die erfindungsgemäße Schnappverbindung ist ein gleichmäßiger Anpressdruck zwischen dem Sensorbauteil und dem Abdeckteil möglich, so daß undichte Stellen sicher verhindert werden können. Weiters wird das Dichtelement in den Nuten des Abdeckteils sicher positioniert, so daß die Geometrie des Meßkanals genau definiert ist.

Die erfindungsgemäße Vorrichtung ist für elektrochemische Sensoren, wie für optische oder kombinierte Sensoren geeignet. Insbesonders können Biosensoren, Elektrolytsensoren und Blutgassensoren vorgesehen sein.

Die Rastelemente zwischen dem Sensorbauteil und dem Abdeckteil können so ausgebildet sein, daß sie nach dem Einrasten nicht mehr zerstörungsfrei zu lösen sind, oder es kann in einer Ausführungsvariante vorgesehen sein, daß die Verbindung betriebsmäßig lösbar ist. Im ersten Fall stellt die gesamte Vorrichtung einen Wegwerfteil dar, der zwar für den Mehrfachgebrauch bestimmt sein kann, aber als Ganzes verworfen wird.

Vorzugsweise ist vorgesehen, daß an einer Seite des Meßkanals am Abdeckteil Rastflächen angeformt sind, in die im zusammengebauten Zustand Haltenasen des Sensorbauteils eingreifen, und daß an der gegenüberliegenden Seite des Meßkanals jeweils zwischen zwei Leiterbahnen Rasten zur Verbindung von Sensorbauteil und Abdeckteil gebildet sind. Auf diese Weise ist es möglich, eine besonders stabile und steife Ausführung zu erreichen, die eine große Betriebssicherheit aufweist.

Die Passung der Bauteile zueinander kann dadurch verbessert werden, daß am Abdeckteil Zentrierstifte vorgesehen sind, die dazu bestimmt sind, in entsprechende Bohrungen im Sensorbauteil einzugreifen.

Besonders bevorzugt ist es, daß die Dichtlippe eine Dicke von 10 bis 500 um vorzugsweise 100 bis 200 µm aufweist.

In der Folge wird die Erfindung anhand der in den Figuren dargestellten Ausführungsbeispiele näher erläutert. Die Figuren zeigen:

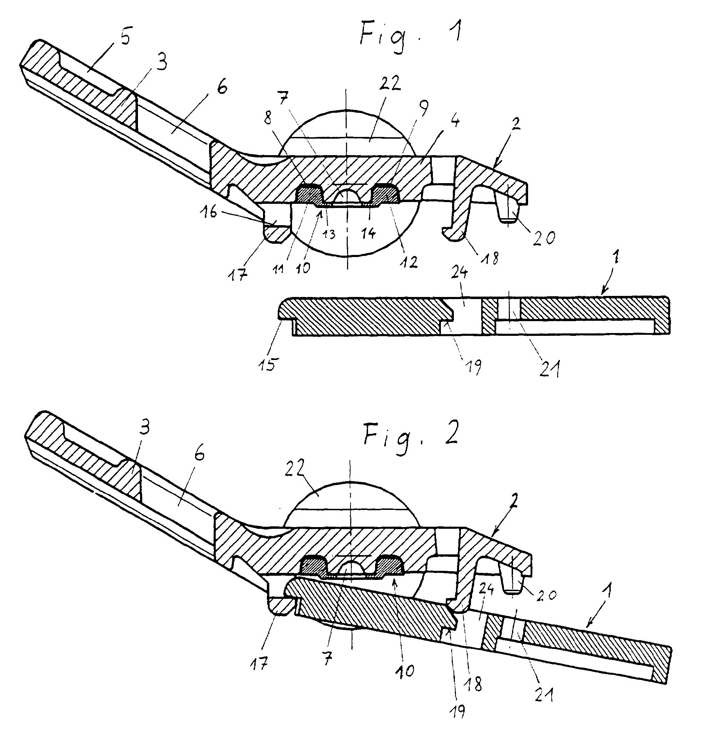

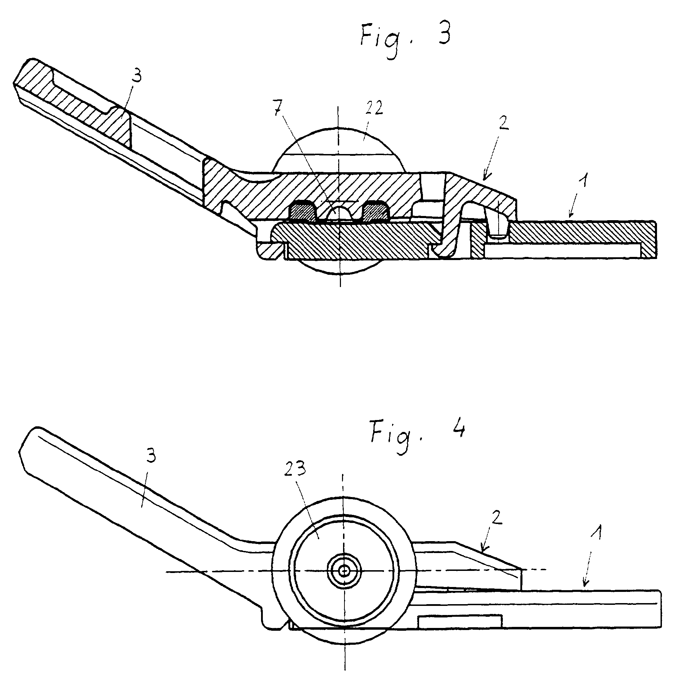

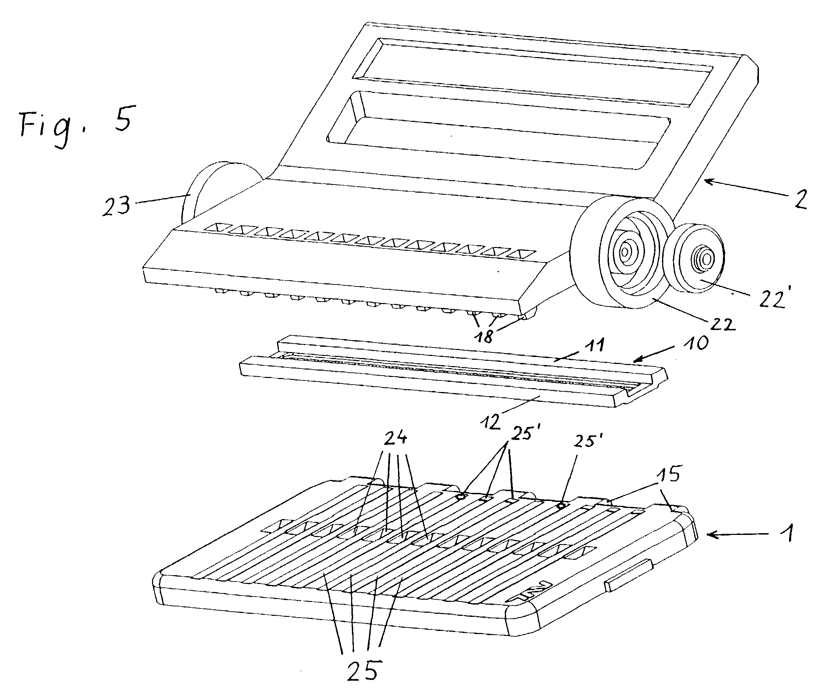

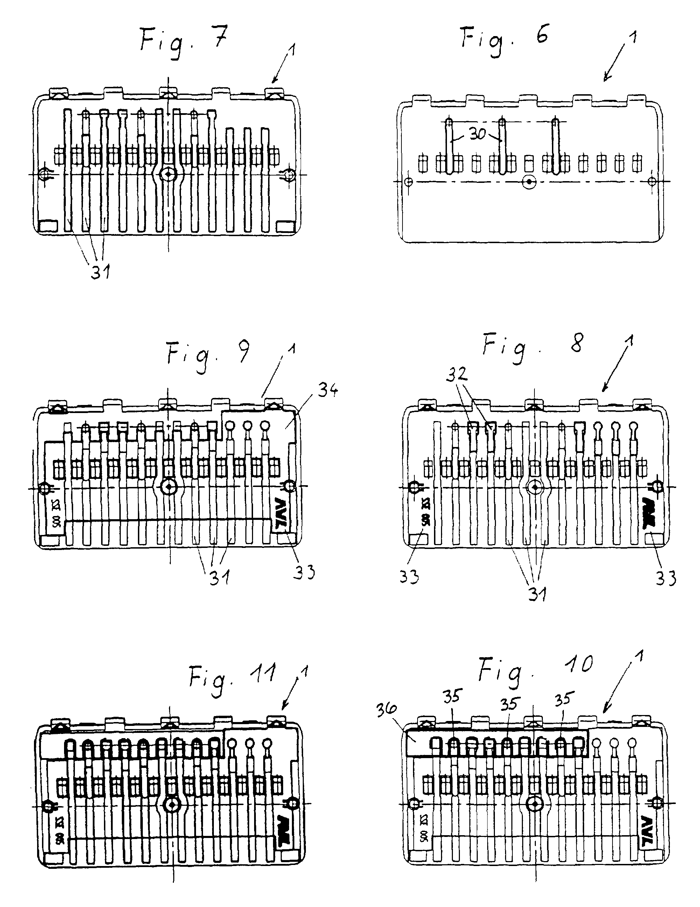

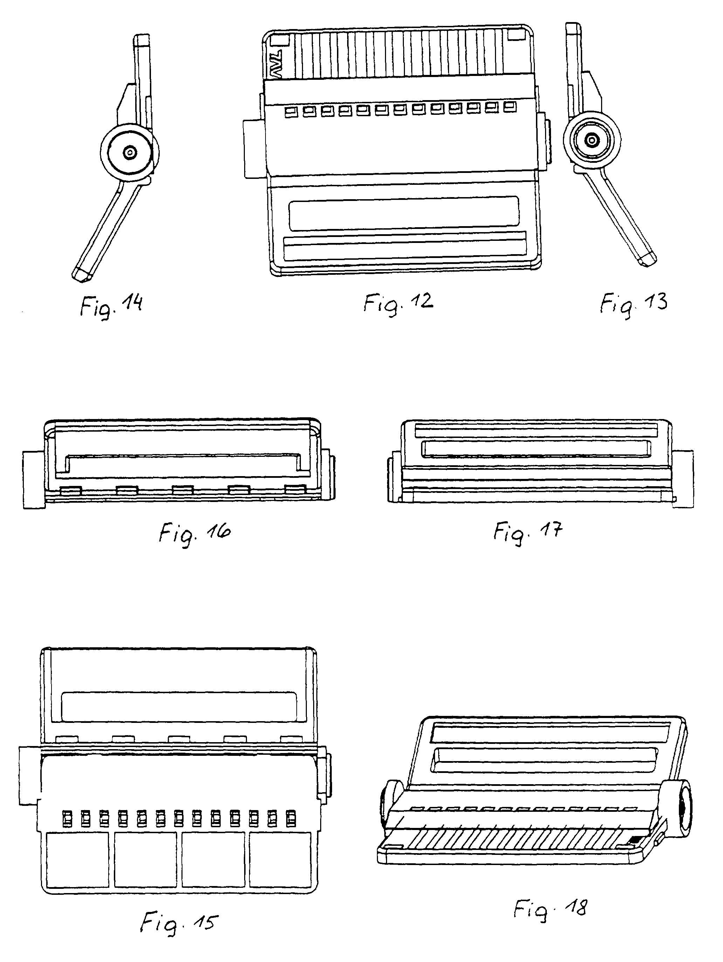

Die Fig. 1 einen Schnitt durch eine erfindungsgemäße Ausführungsvariante mit einem vom Sensorbauteil getrennten Abdeckteil; die Fig. 2 einen Schnitt entsprechend der Fig. 1 während des Einsetzens des Abdeckteils auf den Sensorbauteil; die Fig. 3 einen Schnitt entsprechend den Fig. 1 und 2 in zusammengebauten Zustand; die Fig. 4 eine seitliche Ansicht der Vorrichtung; die Fig. 5 eine axonometrische Explosionsdarstellung einer Ausführungsvariante der erfindungsgemäßen Vorrichtung, die Fig. 6 bis 11 ein Beispiel für die Herstellung des Sensorbauteils in der Reihenfolge der Herstellung, die Fig. 12 bis 18 zeigen verschiedene Ansichten der erfindungsgemäßen Vorrichtung, Fig. 12 von oben, Fig. 13 von links, Fig. 14 von rechts, Fig. 15 von unten, Fig. 16 von vorne, Fig. 17 von hinten und Fig. 18 eine Schrägansicht.

Die erfindungsgemäße Vorrichtung besteht im wesentlichen aus einem Sensorbauteil 1 und einem Abdeckteil 2. Das Sensorbauteil 1 ist im wesentlichen planar ausgeführt. Das Abdeckteil 2 ist zur Erleichterung der Handhabung mit einem Handgriff 3 versehen, der von dem eigentlichen Abdeckabschnitt 4 in einem stumpfen Winkel nach oben hin absteht, und eine Griffmulde 5 und eine Ausnehmung 6 aufweist, die dem leichteren Ergreifen des Abdeckteils 2 dienen. In dem Abdeckabschnitt 4 ist der Meßkanal 7 als sich in Längsrichtung erstreckende, zum Sensorteil 1 offene Nut ausgeformt. Parallel zum Meßkanal 7 sind Nuten 8 und 9 gebildet, die zur Aufnahme eines Dichtelements 10 vorgesehen sind. Das Dichtelement 10 setzt sich aus Führungskörpern 11 und 12 zusammen, die in den Nuten 8 und 9 aufgenommen sind. An den Führungskörpem 11 und 12 ist jeweils eine schmale Dichtlippe 13, 14 vorgesehen, deren Dicke etwa 150 µm beträgt. Durch die Dichtlippen 13, 14 wird die eigentliche Abdichtung zwischen dem Sensorbauteil 1 und dem Abdeckteil 2 hergestellt.

Die Verbindung zwischen dem Sensorbauteil 1 und dem Abdeckteil 2 erfolgt in der Art, wie sie in den Fig. 2 und 3 dargestellt ist. Eine Reihe von Haltenasen 15, die an einer Kante des Sensorbauteils 1 entlang einer geraden Linie angeordnet sind, wird auf eine jeweils korrespondierende Rastfläche 16 aufgesetzt. Die Rastflächen 16 sind am Abdeckteil 2 in einem sich in Längsrichtung erstreckenden Vorsprung 17 gebildet, der nach unten hin vorragt. Nachdem die Haltenasen 15 auf die Rastflächen 16 aufgesetzt sind, werden der Sensorbauteil 1 und der Abdeckteil 2 um die Haltenase 15 als Drehpunkt zueinander geschwenkt. Dabei greifen Rasten 18, die vom Abdeckteil 2 nach unten vorstehen in Rastflächen 19 ein, die in Öffnungen 24 des Sensorteils 1 ausgebildet sind. Eine genaue Positionierung von Sensorbauteil 1 und Abdeckbauteil 2 wird durch Zentrierstifte 20 erreicht, die am Abdeckteil 2 nach unten hin vorstehen, und im zusammengebauten Zustand in Zentrierbohrungen 21 am Sensorbauteil 1 einrasten.

Die Zufuhr bzw. Abfuhr des zu untersuchenden Mediums erfolgt über Anschlüsse 22 bzw. 23, die jeweils an den Enden des Meßkanals 7 am Abdeckteil 2 angeformt sind.

Die Fig. 5 zeigt als Explosionsdarstellung den Gesamtaufbau der erfindungsgemäßen Vorrichtung. Es ist ersichtlich, daß insgesamt zwölf Leiterbahnen 25, die jeweils zu Sensoren 25' führen, auf der Oberfläche des Sensorbauteils 1 vorgesehen sind. Die Leiterbahnen 25 und die Sensoren 25' können auf die plane Oberfläche durch an sich bekannte Dick- und/oder Dünnschichttechnologien (Sputtern, Siebdrucken, Dispensen) aufgebracht werden. Die Leiterbahnen dienen gleichzeitig zur Kontaktierung der Sensoren. Jeweils zwischen zwei Leiterbahnen 25 sind Öffnungen 24 gebildet, durch die hindurch die Rasten 18 eingeführt werden können, um in die in der Fig. 5 nicht ersichtlichen Rastflächen 19 einzugreifen. Mit 22' ist ein Dichtelement im Anschluß 22 bezeichnet.

Aus den Fig. 6 bis 11 ist im Zuge eines Beispiels die Herstellungsabfolge für das Sensorbauteil 1 gezeigt. Zunächst werden in der Fig. 6 Goldleiterbahnen 30 aufgesputtert. In der Folge werden in der Fig. 7 Silber/AgCl-Leiterbahnen 31 durch Siebdruck aufgebracht. In der Fig. 8 werden durch Siebdruck Carbonabdeckungen 32 und die Beschriftung 33 des Bauteils aufgebracht. In der Fig. 9 wird die siebgedruckte Isolationsschicht 34 (Dielelektrikumspaste) aufgebracht. In der Fig. 10 erfolgt der Zusammenbau des Sensors mit Einlegeteilen 35 und das Verschweißen der PC-Membran 36, und in der Fig. 11 ist das fertige Sensorbauteil 1 dargestellt.

Die vorliegende Erfindung ermöglicht die Bereitstellung einer Meßkammer für Planarsensorik von besonders einfachem Aufbau, wobei der Meßkanal eine genau definierte Geometrie aufweist und weitgehend frei von unerwünschten Materialien ist. Das Sensorbauteil 1 und das Abdeckbauteil 2 können transparent oder transluzent ausgeführt sein, um einerseits die Probe sehen zu können, und andererseits gegebenenfalls eine Beleuchtung von unten her durchführen zu können. Der Meßkanal 7 besitzt eine Länge von 1 bis 5 cm, vorzugsweise etwa 2 bis 3 cm, und ist 1 bis 3 mm breit und 0,5 bis 3 mm tief. Vorzugsweise beträgt die Breite 1,5 mm und die Tiefe ebenfalls 1,5 mm. Daraus ergibt sich ein Meßkanalvolumen von 5 bis 200 µl, vorzugsweise 20 bis 50 µl.

Die erfindungsgemäße Vorrichtung ist für diagnostische Zwecke, vorzugsweise Blutplasma-, Serum- und Urinanalysen vorzüglich geeignet.

## Patentansprüche

1. Vorrichtung zur Durchführung von elektrochemischen und/oder optischen Meßvorgängen in Flüssigkeiten, bestehend aus folgenden Elementen:
- einem Sensorbauteil (1), das im wesentlichen planar ausgebildet ist, und das eine Mehrzahl von Sensoren trägt, die ggf. mit Leiterbahnen in Verbindung stehen;
- einem Abdeckteil (2), in dem ein nutförmiger Meßkanal (7) ausgeformt ist, der für den Durchfluß der Flüssigkeit bestimmt ist;
- einem Dichtelement (10) zur Abdichtung des Meßkanals, das zwischen dem Sensorbauteil (1) und dem Abdeckteil (2) angeordnet ist,
**dadurch gekennzeichnet, daß** in dem Abdeckteil (2) Nuten (8, 9) parallel zum Meßkanal (7) gebildet sind, wobei jeweils zwischen einer Nut und dem Meßkanal ein Steg geformt ist, daß das Dichtelement (10) im wesentlichen aus Führungskörpern (11, 12) besteht, die in den Nuten (8, 9) des Abdeckteils (2) aufgenommen sind, und an denen eine schmale Dichtlippe (13, 14) angeformt ist, die im Bereich des Steges vorsteht, und daß die Verbindung zwischen dem Sensorbauteil (1) und dem Abdeckteil (2) durch eine Vielzahl von Rastelementen (15, 16, 18, 19) erfolgt, die entlang des Meßkanals (7) verteilt angeordnet sind.

2. Vorrichtung nach Anspruch 1, **dadurch gekennzeichnet, daß** an einer Seite des Meßkanals (7) am Abdeckteil (2) Rastflächen (16) angeformt sind, in die im zusammengebauten Zustand Haltenasen (15) des Sensorbauteils (1) eingreifen, und daß an der gegenüberliegenden Seite des Meßkanals (7) jeweils zwischen zwei Leiterbahnen Rasten (18) zur Verbindung von Sensorbauteil (1) und Abdeckteil (2) gebildet sind.

3. Vorrichtung nach einem der Ansprüche 1 oder 2, **dadurch gekennzeichnet, daß** am Abdeckteil (2) Zentrierstifte (20) vorgesehen sind, die dazu bestimmt sind, in entsprechende Bohrungen (21) im Sensorbauteil (1) einzugreifen.

4. Vorrichtung nach einem der Ansprüche 1 bis 3, **dadurch gekennzeichnet, daß** die Dichtlippe (13, 14) eine Dicke von 10 bis 500 µm vorzugsweise 100 bis 200 µm aufweist.

## Claims

1. Device for performing electrochemical and/or optical measurements in fluids, comprising the following elements;
- a sensor part (1) of substantially planar configuration, which carries a plurality of sensors that are possibly connected to conductive paths;
- a cover part (2), in which a groove-shaped measuring channel (7) is formed through which the fluid will flow;
- a sealing element (10) for sealing the measuring channel, which is positioned between sensor part (1) and cover part (2),
**characterized in that** grooves (8, 9) are formed in the cover part (2), which run parallel to the measuring channel (7), a ridge being provided between each groove and the measuring channel, and wherein the sealing element (10) substantially comprises guiding bodies (11, 12), which are retained in grooves (8, 9) of cover part (2) and are provided with integrally molded narrow sealing lips (13, 14) protruding in the area of the ridge, and, further, wherein the sensor part (1) and the cover part (2) are joined by a plurality of locking elements (15, 16, 18, 19), which are distributed along the measuring channel (7).

2. Device according to claim 1, **characterized in that** locking faces (16) are provided integrally with the cover part (2) on one side of the measuring channel (7), which faces (16) are engaged by retaining noses (15) of the sensor part (1) in the assembled state, and wherein snaps (18) are provided on the opposite side of the measuring channel (7) between every two conductive paths, in order to join sensor part (1) and cover part (2).

3. Device according to claim 1 or 2, **characterized in that** centering pins (20) are provided on the cover part (2), which are designed to engage in corresponding bores (21) in the sensor part (1).

4. Device according to any of claims 1 to 3, **characterized in that** the sealing lip (13, 14) has a thickness of 10 to 500 µm, i.e., 100 to 200 µm, preferably.

## Revendications

1. Dispositif pour effectuer des mesures électrochimiques et / ou optiques sur des liquides, constitué par les éléments suivants :
- un corps (1) portant des sondes, qui a une structure essentiellement plane et qui porte une pluralité de sondes qui sont, le cas échéant, connectées à des pistes conductrices ;
- un couvercle (2), dans lequel est prévu un canal de mesure (7) ayant la forme d'une gorge et destiné au flux traversant du liquide ;
- un élément d'étanchéité (10) pour isoler le canal de mesure, qui est agencé entre le corps (1) portant des sondes et le couvercle (2),
**caractérisé en ce que** dans le couvercle (2), il y des gorges (8, 9) parallèles au canal de mesure (7) et donc qu'un bourrelet est présent entre chaque gorge et le canal de mesure, **en ce que** l'élément d'étanchéité (10) est constitué essentiellement de corps de guidage (11, 12) qui sont reçus dans les gorges (8, 9) du couvercle (2) et qui comportent une lèvre étroite (13, 14) qui se trouve dans la région des bourrelets et **en ce qu'**une pluralité d'éléments d'encliquetage (15, 16, 18, 19) sont disposés le long du canal de mesure (7) pour tenir ensemble le corps (1) portant des sondes et le couvercle (2).

2. Dispositif selon la revendication 1, **caractérisé en ce que**, sur un côté du canal de mesure (7), le couvercle (2) comporte des surfaces d'encliquetage (16) sur lesquelles viennent s'encliqueter, dans l'état assemblé, des saillies de retenue (15) du corps (1) portant des sondes et **en ce que** sur le côté opposé du canal de mesure (7) et chaque fois entre deux pistes conductrices, des éléments d'encliquetage (18) sont prévus pour tenir ensemble le corps (1) portant des sondes et le couvercle (2).

3. Dispositif selon la revendication 1 ou la revendication 2, **caractérisé en ce que** sur le couvercle (2), on prévoit des goujons (20) de centrage qui sont réalisés de manière à venir se loger dans des alésages correspondants (21) du corps (1) portant des sondes.

4. Dispositif selon l'une des revendications 1 à 3, **caractérisé en ce que** la lèvre d'étanchéité (13, 14) a une épaisseur de 10 à 500 µm et, de préférence, de 100 à 200 µm.
